# EUROPEAN PATENT SPECIFICATION

(11) **EP 2 367 443 B1**
(45) Date of publication and mention of the grant of the patent: **16.01.2013**
(21) Application number: 09765074.1
(22) Date of filing: 30.11.2009
(51) Int. Cl.: A23L 1/015, A23L 1/22, A23L 1/221, A23L 1/228, A23L 1/39

(54) **UMAMI ACTIVE FRACTION AND METHOD TO PREPARE THE SAME**
UMAMI-AKTIVE FRAKTION UND HERSTELLUNGSVERFAHREN DAFÜR
FRACTION ACTIVE D'UMAMI ET PROCÉDÉ POUR SA PRÉPARATION.

(30) Priority: 19.12.2008 EP 08172402
(43) Date of publication of application: 28.09.2011
(73) Proprietor: Unilever NV, 3013 AL Rotterdam (NL); Unilever PLC, London, Greater London EC4Y 0DY (GB)
(72) Inventor: DUBBELMAN, Sander, NL-3133 AT Vlaardingen (NL); MAVROUDIS, Nikolaos, NL-3133 AT Vlaardingen (NL); RAVESTEIN, Peter, NL-3133 AT Vlaardingen (NL)
(74) Representative: Tjon, Hon Kong Guno
(86) International application number: PCT/EP2009/066043
(87) International publication number: WO 2010/079013

(56) References cited:
- WO-A-99/60868
- WO-A-2008/040611

## Description

### Field of the Invention

The present invention relates to active fraction for adding and/or enhancing umami taste and compositions comprising the same, for use in foods, and to methods of preparing such fractions and compositions.

### Background of the Invention

Monsodium glutamate also known as MSG, Ve-tsin or E621 is a frequently used ingredient to add umami taste in foods. Monosodium glutamate is the sodium salt of the amino acid glutamic acid. Originally it comes from the Far East, but nowadays it is used in many products. Monosodium glutamate is a controversial additive. Many people claim health problems after eating MSG, on the other hand clinical studies give no reason for concern.

The tongue is sensitive to five tastes -- salt, sweet, bitter, sour, and "umami" in the Japanese language, the taste of glutamate. There is no analogous word to describe this taste quality in the English language. "Umami" is used by the Japanese to describe the taste of MSG as well as the meaty taste of certain fish and broth. It should be noted that although glutamate is often referred to as flavour enhancer, this probably incorrect as the umami taste is a taste on its own. Therefore, the term flavour or taste enhancer will not be used to avoid confusion. Instead, the taste of glutamate will be described as umami taste.

Hence, whereas MSG or glutamate can actually aid to providing healthier eating habits, consumer acceptance is generally low, even despite the proved safety of MSG. There is thus a need for MSG based umami active compositions that constitute natural food ingredients and that can be mentioned on food product labels as such or do not have to be mentioned on the labels at all.

One such composition has been described in EP 1 082 027, which relates to a clear tomato concentrate comprising hydrolysed proteins, amongst other glutamate. The clear tomato concentrate of EP 1 082 027 is produced by processing tomatoes so as to obtain two fractions, the serum and the pulp, where after the serum is further concentrated to a value of e.g. 80 Brix and then hydrolyzed or vice versa. Both acid and enzymatic hydrolysis are suggested in EP 1 082 027. The obtained clear tomato concentrate may subsequently be dried on a variety of materials. Production of tomato serum as such has been described in a variety of prior art documents, such as WO 03/101223 and WO 95/16363.

The clear tomato concentrate obtainable by the method disclosed in EP 1 082 027 has several draw-backs. First of all, in spite of the fact that the tomato concentrate is described as clear, i.e. transparent or having low opacity, it is in fact red to dark red. It is noted that the serum in accordance with EP 1 082 027 has a lycopene level of about 5 ppm at a Brix value of 5, as described by WO 95/16363 to which EP 1 082 027 refers, such that after concentration to a Brix value of 60 or higher, the lycopene level must be 60 ppm or higher, thus giving a far more intense red colour than do fresh tomatoes, having a lycopene level of approximately 25, according to USDA. This problem becomes particularly evident when applying said concentrate at levels exceeding approximately 0.5 %, thus greatly reducing the applicability thereof in a whole range of products wherein redness is undesirable, e.g. in white soups such as cream soups, bouillons, such a chicken bouillons and beverages. Secondly, it was found that following the teachings of EP 1 082 027, concentrates are obtained that still possess tomato taste/flavour as well as tomato smell and giving a specific sour taste. Thus, these products are in fact unsuitable for application in substantial amounts, i.e. in amounts exceeding approximately 0.5 wt%, in non-tomato based products.

Applicants have recently described improved tomato extracts in WO2008/040611 which do not have the disadvantages of EP 1 082 027. However, the method disclosed may not be sufficiently cost effective for some products/markets. Therefore, there is still a need to provide an alternative more cost effective method of providing umami active tomato fractions, capable of enhancing the umami taste by at least two fold, while such fractions can be used in food products without adding the characteristic redness of tomatoes.

### Summary of the Invention

Surprisingly, applicants have found a more cost effective process to prepare an umami active tomato fraction which can be used to add and/or augment the umami taste in food products. The inventive method comprises the steps of
a) providing a tomato serum, preferably substantially free from sucrose;
b) separating the serum into two or more portions: at least one first portion and at least one second portion whereby the at least one first portion is lower in lycopene than the at least one second portion;
c) concentrating the at least one first portion low in lycopene,;
d) fractionating at least one first portion low in lycopene obtained in step c) into at least three fractions: a first fraction, a second fraction and a third fraction
   whereby the w/w ratio of citric acid to glutamic acid (Citr/Glut) of the first fraction is higher than the second fraction, and the Citr/Glut ratio of the third fraction is lower than in the second fraction;
   and whereby the second fraction has a w/w ratio of glucose to glutamic acid of at least 7, preferably at least 8, more preferably at least 10, preferably at most 100 000, more preferably at most 10 000, most preferably at most 1000 and;
e) optionally, concentrating said second fraction, preferably to a Brix value of at least 10, preferably at least 12, more preferably at least 20, more preferably at least 30 and preferably at most 80, more preferably at most 60, even more preferably at most 50 degrees Brix, whereby said second fraction is used as the umami active tomato fraction. Unexpectedly, the umami active fractions obtainable with the inventive method can also be used to replace at least part of the glutamic acid and sweetening agent in a food product. Other embodiments and advantages of the invention are described below.

The method according to the invention was surprisingly more cost effective than the prior art method of WO2008/040611. Compared to the prior art method described in WO2008/040611 the yield of the inventive method was at least 5 times increased.

### Detailed description of the invention

### Definitions

The term "umami active" will be used to describe a composition which either has an umami taste or is capable of enhancing umami taste or both. The term "fraction' will be used to describe part of a plant extract obtainable after fractionation. The term "plant extract" will be used to describe the part of the plant from which insoluble matter such as skins, seeds have been removed. An example of a plant extract is tomato serum or a fruit juice.

The term tomato sugar(s) will be used to describe the combined amount of tomato glucose and fructose. Preferably these are measured as described in the examples. The term "tomato fraction" will be used to describe a fraction obtainable after a fractionation step using a tomato extract as a feed. The term "tomato extract" will be used to denote a composition extracted from tomatoes such as tomato serum. When the term "first", "second" and "third is used to distinguish e.g. a first fraction from a second fraction, respectively a third fraction, these terms are not necessarily meant to describe the order of elution of these fractions, although in one preferred embodiment they do (see examples. Although, the inventive tomato fraction will not have a characteristic tomato smell it usually will have trace amounts of some aroma and phenolic compounds that survive the process to obtain said tomato fraction such as the separation, fractionation steps. A tomato fraction will usually have amounts of GABA, proline and potassium. Preferably a tomato fraction will have at least 0.05 wt% of the combined amount of GABA and proline and preferably, at least 0.1 wt% of potassium by dry weight of the tomato fraction. It is understood that when a "combined amount" is described it does not mean that all components need to be present. In the case of a "combined amount of GABA and proline" e.g. in some cases proline may be absent.

It will be appreciated by the skilled person that glutamic acid and glutamate refer to the protonated acid and the deprotonated solubilised form of the same acid, respectively. In addition glutamate is commonly used to refer to salts of the free acid. For the sake of convenience the term glutamic acid is used herein to refer to both the free protonated acid and the deprotonated form either in solution or as a salt, unless indicated otherwise. Thus, to calculate the amount of glutamic acid in the tomato extract, all glutamate therein is assumed be in the form of glutamic acid.

The term "Brix value" which is considered to be synonymous to the term Degrees Brix (symbol °Bx) is a measurement of the amount of dry matter. It is a measure of the percent total soluble solids in a given weight of plant juice, which includes the summation of sucrose glucose, fructose, vitamins, amino acids, protein, hormones and any other soluble solids. It is often expressed as the percentage of sucrose. It is measured with a saccharimeter that measures specific gravity of a liquid or more easily with a refractometer or a Brix hydrometer.

Typically the umami active tomato fraction is colourless, in particular devoid of the characteristic redness of tomatoes, to such a degree that it does not impart perceptible redness when applied in umami enhancing and/or taste enhancing quantities in a foodstuff or beverage, which means that it preferably has a b* value of less than 8 at a Brix level of 1, more preferably it has a b* value of less than 5 at said Brix value, more preferably a b* value of less than 2 at said Brix value and most preferably it has an b* value of less than 0.

As is known by the skilled person, L*, a*, and b* values are each spectral variables in the CIELAB colourspace (full name is CIE 1976 L*, a*, b*), expressing colour values in a rectangular coordinate system, with the L*, a*, and b* values each corresponding to one dimension of the three dimensions forming the rectangular coordinate system. The L* value characterizes the lightness/darkness aspect of the colour of the region along an axis ranging from black to white, with corresponding values ranging from 0 to 100. The a* value characterizes the colour of the region along an axis ranging from green to red, with positive values corresponding to red and negative values corresponding to green. The b* value characterizes the colour of the region along an axis ranging from blue to yellow, with positive values corresponding to yellow and negative values corresponding to blue. Together, the a* value and the b* value express the hue and chroma of the region. The zero point in the plane defined by the a* values and the b* values corresponds to a neutral grey colour having a L* value corresponding to the intersection of the plane with the L* axis. A CIELAB of 50, 75, 5, for example, is typical for red, while a CIELAB of 50, -75, 5 is typical for green. A yellow sample would perhaps have CIELAB of 70, 0, 80. Two samples that are the same color and change only in lightness would be, for example, 50, 50, 50 and 70, 50, 50. Suitable measuring devices include colorimeters and spectrophotometers as is known by the skilled person. References to colour reduction in the context of tomato extracts, are to be understood as meaning that, the visible colour, expressed in terms of L*, a*, and/or b*values, exhibited by the reduced colour tomato extract is reduced relative to the visible colour, expressed in terms of L*, a*, and/or b*values, exhibited by the starting material.

The term "capable of enhancing the umami taste" is meant to describe the capability of an umami active fraction to enhance umami taste itself. A composition may be considered capable of enhancing umami taste when it is ranked at least equal in umami taste compared to a MSG reference solution comprising 2g/L glutamic acid, while the umami enhancing composition (optionally after dilution) has less than 2g/L glutamic acid, the tasting carried out at pH 5.4. Such MSG reference solution may contain 0.5 wt% NaCl, 0.05wt% of citric acid, and the desired amount of MSG in demineralised water, e.g. 2 g/L glutamic acid. For example, if a composition X with 0. 5 g/L glutamic acid is ranked at least equal in umami taste compared to a MSG reference solution comprising 2 g/L glutamic acid, composition X is considered to enhance the umami taste at least four fold. For an optimal resolving power, the umami enhancing composition may diluted so it can be compared to various MSG reference solutions, e.g. like those used in the examples having 0.5, 1, 1.5 and 2 g/L glutamic acid, respectively. In addition for the ranking test, 0.5 wt% of NaCl may be added to the umami enhancing composition (diluted or not) for an optimal resolving power.

### Process

According to one aspect of the invention a method of producing an umami active fraction is provided comprising the steps of
a) roviding a tomato serum, preferably substantially free from sucrose;
b) separating the serum into two or more portions: at least one first portion and at least one second portion whereby the at least one first portion is lower in lycopene than the at least one second portion;
c) concentrating the at least one first portion low in lycopene,;
d) fractionating at least one first portion low in lycopene obtained in step c) into at least three fractions: a first fraction, a second fraction and a third fraction
   whereby the w/w ratio of citric acid to glutamic acid (Citr/Glut) of the first fraction is higher than the second fraction, and the Citr/Glut ratio of the third fraction is lower than in the second fraction; and whereby the second fraction has a w/w ratio of glucose to glutamic acid of at least 7, preferably at least 8, more preferably at least 10, preferably at most 100 000, more preferably at most 10 000, most preferably at most 1000 and;
e) optionally, concentrating said second fraction, preferably to a Brix value of at least 10, preferably at last 12, more preferably at least 20, more preferably at least 30 and preferably at most 80, more preferably at most 60, even more preferably at most 50 degrees Brix, whereby said second fraction is used as the umami active tomato fraction.

Prior to providing the serum, tomatoes are typically collected, washed, sorted and selected in accordance with the usual practice in tomato processing. These steps are not an essential aspect of the invention and any feasible type of operation may be applied with regard to pre-treatment without departing from the scope of the invention.

Typically, the step of providing a tomato serum comprises a stage of comminuting and/or macerating tomatoes, which in accordance with the invention, is meant to encompass any type of process that can be employed to disintegrate or break the tomatoes, typically, in order to obtain a pumpable mass. Typically the comminuting or macerating is continued until the particle size in the pumpable mass is reduced to certain predetermined dimensions. In order to achieve this, any type of operation and/or apparatus known to or conceivable for the skilled person may be used in accordance with the invention. According to a preferred embodiment a chopper pump is employed, wherein the tomatoes are pressed through square holes, typically 1-2 cm in diameter. In a particularly preferred embodiment, the step of providing the serum comprises the stage of applying heat prior to, during or after the comminuting and/or macerating of the tomatoes. If the amount of heat applied is such that the tomatoes reach a temperature of above 80 degrees C, the process is generally referred to as hot break. Hot break has the advantage that enzymes, e.g. pectin-degrading enzymes, are inactivated quickly.

The tomato serum used is preferably substantially free from sucrose. For this purpose the term substantially free from sucrose is meant to describe a level of less than 5 wt%, more preferably less than 3 wt%, most preferably less than 2 wt% of sucrose by weight of the tomato serum based on dry matter.

After having obtained a pumpable mass, in a separation step said pumpable mass is separated into serum - an aqueous liquid comprising soluble tomato solids - and pulp, a (wet) solid mass containing mainly insoluble tomato components such as the skin and seeds. In accordance with a preferred embodiment of the invention seeds and skin may be removed from the pumpable mass, typically by sieving using perforated screens or the like in accordance with common tomato processing, prior to said separation. Separation of the pumpable mass into serum and pulp can be effected by any means known in the art, in particular using a decanter or a centrifugal separator. In a particularly preferred embodiment of the invention a centrifugal separator is employed, such as a Westfalia CA-365-010 at a revolution speed of 4000 rpm and/or an Alfa Laval Centrifuge. In the context of the invention the pulp obtained is considered to constitute a waste material, but it may be used in accordance with conventional tomato processing, for a variety of purposes known by the skilled person. Performing the separation in two or even more steps may be preferred. However, as will be clear to the skilled person, separation in one single step, though less convenient, may be found just as suitable and may be applied without departing from the scope of the invention.

Optionally, the obtained serum may be clarified by micro filtration, so as to assure that said serum is free of any undissolved solids remaining, which may typically present problems during further process steps. Typically the additional micro filtration step comprises forcing the serum through a microfilter having a pore size within the range of 0.2-100 micron, preferably within the range of 2-50 micron, most preferably within the range of 3-30 micron (endpoints included in the range).

In a further step, the obtained serum, if desired after the micro-filtration step described supra, is separated into two or more portions: at least one first portion and at least one second portion whereby the at least one first portion is lower in lycopene than the at least one second portion.

The serum used as starting material for this separation step is preferably undiluted or even more preferably concentrated. Concentration may be carried out until a specific predefined Brix level has been reached. For example, the solution may be concentrated by removing at least part of the water content e.g. under reduced pressure and/or increased temperature, such as to increase the rate of water evaporation. As will be understood by the skilled person, applying reduced pressure can suitably reduce thermal damage to the product as lower temperatures can be used, thus improving the quality of the obtained product. Preferably the concentration is performed using a falling film evaporator or plate evaporator, although entirely different systems are available and can be used without departing from the scope of the invention. Surprisingly, applicants have found that concentrating the solution used as the feed for the separation step or a fractionation step was especially advantageous by rendering the process more robust and cost effective. Thus, the feed for the separation step, the first fractionation step is preferably concentrated until having a Brix value of at least 10, preferably at least 12, more preferably at least 20, more preferably at least 30 and preferably at most 80, more preferably at most 60, even more preferably at most 50 degrees Brix.

The separation step preferably comprises ultra-filtrating the serum through a membrane with a molecular weight cut off of 250 kDa, more preferably 200 kDa, even more preferably 100 kDa, most preferably 50 kDa. For the ultra filtration any suitable membrane may be used known to the skilled person in the art for this purpose. Typically, ultra filtration membranes are meant to describe membranes which can remove particles of 0.001 - 0.02 micron. A suitable membrane is an Alfa-Laval polysulphone membrane with 100kDa molecular weight cut-off (GR40PP). If ultra filtration is used, the at least one second portion is preferably the retentate of the ultra filtration step having a level of lycopene higher than the at least one first portion, the latter being the permeate. The at least one first portion of that separation step, e.g. the ultra filtration permeate is preferably substantially free from lycopene. In fact, all tomato fractions according to the invention are preferably substantially free from lycopene. Substantially free from lycopene in this respect means that the lycopene level is below 3 ppm, more preferably below 1 ppm, most preferably it is below 0.5 ppm, preferably at least 0 ppm, preferably 0 ppm based on the wet weight thereof.

In a preferred subsequent step, the at least one first portion obtained after the first separation step may then be concentrated as described above.

The at least one first portion obtained from the separation step, in case of ultra filtration the ultra filtration permeate, preferably after having been concentrated to e.g. 40 Brix, is then used as a feed for a chromatographic fractionation. This fractionation step is preferably carried out by passing the feed through the chromatographic separation medium and eluting the feed components from the medium with a suitable eluent, thereby achieving fractionation of the feed into at least one first primary fraction and at least one second primary fraction.

Any suitable method may be used for the fractionation step. Fractionation is preferably achieved by using ion exclusion chromatography whereby the chromatographic separation medium is an ion exclusion resin. Another fractionation technique includes electrodialysis.

Applicants have found that the fractionation is more robust and cost-effective when it is carried out at elevated temperatures. Fractionation, e.g. when ion exclusion chromatography is used, is preferably carried out at a temperature of at least 40 degrees C, preferably at least 50 degrees C, more preferably at least 60 degrees C, preferably at most 105 degrees C, preferably at most 95 degrees C, preferably at most 85 degrees C, most preferably at most 75 degrees C.

The at least one first portion obtained from the separation step used as a feed for the subsequent fractionation step preferably comprises of more than 5 g/L of potassium, preferably more than 10 g/L of potassium, more preferably more than 15 g/L of potassium by weight of said first portion.

Any appropriate solution may be used as eluent for the fractionation but demineralised water is preferred. More preferred is water purified by for example reverse osmosis (e.g. MilliQ). Even more preferred as eluent used in the fractionation is particle free eluent or even more preferred particle free tomato serum of at most 10 degrees Brix, more preferably to at most 5 degrees Brix, even more preferably to at most 3 degrees Brix, preferably at least 0.01 degrees Brix, more preferably at least 0.05 degrees Brix. The desired Brix level may be obtained by concentration or dilution with demineralised water.

In terms of particle size distribution, "particle free eluent" or "particle free tomato serum" is usually meant to describe eluent, respectively tomato serum comprising at most 40 vol%, preferably at most 30 vol%, more preferably at most 20 vol% and preferably at least 0 vol% of particles of larger than 2 micron. Particle free tomato serum may be prepared using any suitable means known to the skilled person such as micro filtration, high speed centrifugation or ultra filtration. Volume size distribution is routinely measured e.g. using a Mastersizer.

Suitable ion exclusion resins include DIAION™ UBK-530, UBK-535, UBK-550, and UBK-555 (each of which is produced by Mitsubishi Chemical Corporation). Especially preferred is UBK-530, a strong acid cation exchange resin containing, as a base material, polystyrene-divinyl benzene gel (produced by MITSUBISHI CHEMICAL CORP.; K+-type; average particle size: 200 to 240 µm; exchange capacity: 1.6 meq/ml) . The eluting solution is preferably demineralised water.

Another fractionation technique, includes electrodialysis. Electrodialysis is an electro-membrane process where transport of ions takes place through ion exchange membranes from one solution to another under the influence of an electric potential. Ion-exchange membranes resemble highly swollen ion-exchange resins in a sheet format. In conventional electrodialysis two different kinds on ion-exchange membranes are used:
- Cation exchange membranes which contain negatively charged groups fixed to the polymer matrix
- Anion exchange membrane which contain positively charged groups fixed to the polymer matrix

Mobile ions in solution that have the same charge as the fixed groups in the membrane are referred as co-ions and mobile ions that have the opposite charge as the fixed groups in the membrane are referred as counter ions. In electrodialysis it is assumed that the total current through the membrane is transported by ions only. Under the influence of an electric field the mobile ions in solution travel to the respective electrodes. Co-ions are rejected by membranes and counter ions pass through the membranes. Generally guided by the teaching of this application, a skilled person will be able to choose the conditions and membranes for electro dialysis to obtain the inventive tomato fraction. More specifically, the membranes should preferably be permeable for negatively charged organic molecules having the molecular weight of 250, more preferably 225, more preferably 200. Most preferably, the membrane should be permeable for citric acid (192).

The fractions resulting from a fractionation step may vary in composition depending on when they are collected. Preferably, fractionation step comprises fractionating at least one first portion low in lycopene obtained in step c) into at least three fractions: a first fraction, a second fraction and a third fraction
whereby the w/w ratio of citric acid to glutamic acid (Citr/Glut) of the first fraction is higher than the second fraction, and the Citr/Glut ratio of the third fraction is lower than in the second fraction;
and whereby the second fraction has a w/w ratio of glucose to glutamic acid of at least 7, preferably at least 8, more preferably at least 10, preferably at most 100 000, more preferably at most 10 000, most preferably at most 1000

### Umami active fraction

The at least one second fraction may be used as an umami active fraction which is preferably substantially free from lycopene and is obtainable by the method according to invention. Said umami active fraction comprises
i) a w/w ratio of glucose to glutamic acid of at least 7, preferably at least 8, more preferably at least 10, preferably at most 100 000, more preferably at most 10 000, most preferably at most 1000
ii) at least 1 wt%, preferably at least 10 wt%, more preferably at least 15 wt% and preferably less than 70 wt%, more preferably less than 60 wt%, even more preferably less than 50 wt% of glutamic acid, all weights by dry weight of the tomato fraction;
iii) preferably a w/w ratio of citric acid to glutamic acid (C/Glu) of more than 0.7, preferably more than 0.75, and preferably less than 1.5, more preferably less than 1.4, more preferably less than 1.3.

According to another preferred embodiment said umami active tomato fraction further comprises
a) at least 5 wt%, preferably at least 15 wt%, more preferably at least 20 wt%, and preferably at most 70 wt% fructose, preferably at most 65 wt%, more preferably at most 60 wt% of fructose
b) preferably a w/w ratio of fructose to glucose of less than 1, preferably less than 0.75, more preferably less than 0.5, even more preferably less than 0.4, most preferably less than 0.2, preferably more than 0.0001 and most preferably 0 or more;
c) preferably at least 0.1 wt%, preferably at least 5 wt%, preferably at least 10 wt%, more preferably at least 15 wt% and preferably less than 70 wt%, more preferably less than 60 wt%, even more preferably less than 50 wt% of aspartic acid;
d) preferably at least 20 wt%, more preferably at least 30 wt%, preferably at least 35 wt%, and preferably at most 90 wt%, more preferably at most 60 wt%, more preferably at most 50 wt% of glucose; based on the dry weight of the umami active tomato fraction.

The examples show that the inventive method provides an umami active tomato fraction substantially free from lycopene having a higher umami taste perception when compared to a solution comprising the equivalent concentration of glutamic acid. Thus, according to a further embodiment, an umami active fraction is provided, preferably substantially free from lycopene obtainable by a method as described above, having at least an equivalent umami taste perception when compared to a composition comprising a higher concentration of glutamic acid.

The umami active fraction which is capable of enhancing umami taste preferably contains at least 1 wt% glutamic acid by dry weight of the umami active fraction. Preferably, the umami active fraction is capable of eluting from a cation exclusion resin in the potassium form at 65 degrees Celsius using a particle free tomato serum as described above as eluent.

In a preferred embodiment, the umami active tomato fraction according to the invention is substantially free from lycopene. An umami active tomato fraction substantially free from lycopene may be advantageously used in various food applications unlike tomato fractions with a characteristic tomato colour.

The umami active fraction may be concentrated as described above for the feed, or even dehydrated, preferably such that a dry powder is obtained. Any method known in the art may be used such as spray drying. An umami enhancing composition or umami active (tomato) fraction in the form of a dry powder can be used in dried concentrated products like soups and bouillons. Thus, according to yet another embodiment of the invention, an umami active (tomato) fraction is provided in the form of a dry powder.

### Food products

The umami active fraction according to the invention may be advantageously used in many food products, especially food products which tolerate and need a sweet and umami taste. The amount of the inventive umami active fraction to be used in a food product is the sufficient amount to obtain the desired umami taste. According to another aspect of the invention a food product is provided comprising a sufficient amount of the inventive umami active fraction, preferably a sufficient amount of the inventive umami active fraction is at least 0.01 wt%, more preferably at least 0.1 wt%, more preferably at least 1 wt%, more preferably at least 5 wt%, more preferably at least 10 wt% and preferably at most 99 wt%, more preferably at most 90 wt%, most preferably at most 70 wt% based on the dry weight of the umami active fraction and the food product. Although it is preferred to use the inventive umami active fraction instead of adding MSG, in some cases it may be combined. Especially preferred food products include tomato ketchup, sauces (e.g. tomato, pasta sauce), (salad) dressings, soups, meals, side dishes, cooking aids, beverages, and fruit and vegetable concentrates. Food products comprising the inventive umami active fraction typically have at least an equivalent umami taste perception when compared to the product comprising a higher concentration of glutamic acid, in absence of the umami enhancing composition.

Cooking aids include bouillon products in any format such a granular, pasty, jelly, compressed (e.g. in cubes with or without a semi solid core). Fruit and vegetable concentrates include those concentrates based on vegetables and/or fruits.

According a further aspect of the invention a method is provided for adding or enhancing umami taste of a food product by mixing the food product with a sufficient amount of umami active tomato fraction. According yet another embodiment of the invention, a method to prepare a food product is provided whereby at least part of the glutamic acid and sweetening agent has been decreased comprising the step of replacing at least part of the glutamic acid and sweetening agent in a food product by a sufficient amount of umami active fraction as described above. A sufficient amount is an amount sufficient to replace said glutamic acid and sweetening agent while maintaining the same umami and sweet taste. More preferably, a sufficient amount of the umami active fraction may be one of the respective preferably amounts in wt% as described above. According a further aspect of the invention a method is provided for adding umami taste to a food product comprising the step of mixing the food product with an umami enhancing composition, respectively umami active fraction according to the invention, preferably in a sufficient amount as described above.

According to another aspect of the invention a method is provided to prepare a food product whereby at least part of the glutamic acid has been decreased comprising the step of replacing at least part of the glutamic acid by a sufficient amount of umami enhancing composition, respectively umami active fraction (according to the invention) while maintaining the same umami taste.

Since lowering the amount of glutamic acid may result in less MSG, and thus decreased amounts of sodium in the food product, according to yet another aspect of the invention a method is provided for lowering the amount of sodium in a food product containing MSG comprising the step of replacing at least part of the MSG by a sufficient amount of umami enhancing composition, respectively umami active fraction (according to the invention) while maintaining the same umami taste.

Different embodiments of the invention may be carried out in using preferred or more preferred conditions (e.g. level of degrees Brix) or ingredients (e.g. levels of citric acid, glutamic acid). Preferred ranges will often be described in the following format: preferably at least x1, more preferably at least x2, even more preferably x3, preferably at most y1, more preferably at most y2, even more preferably at most y3, whereby x1<x2<x3<y3<y2<y1. This format is meant to include the preferred ranges x1 to y1, more preferably x2 to y2 and even more preferably x3 to y3 whereby the endpoints are included and also all subranges subsumed therein (e.g. x1 to y3 and x3 to y1). The same applies when ranges are described in the format "more than x1" or "less than y1" except that the endpoints are not included. Vice versa, when preferred ranges are described as x1 to y1, more preferably x2 to y2 and even more preferably x3 to y3, the endpoints are meant to be included and also all subranges subsumed therein (e.g. x1 to y3 and x3 to y1). In addition, all open ended ranges are meant to be included: preferably at least x1, more preferably at least x2, even more preferably x3, preferably at most y1, more preferably at most y2, even more preferably at most y3.

The term "comprising" whenever used in this document is intended to indicate the presence of stated features, integers, steps, components, but not to preclude the presence or addition of one or more other features, integers, steps, components or groups thereof.

The invention is further illustrated by the following nonlimiting examples. It will be clear to the skilled person how to carry out the invention by using equivalent means without departing from the invention.

### Examples

### Example 1

Tomatoes were washed, heated up to 95 degrees C and pressed through square holes resulting in an aqueous liquid comprising soluble tomato solids and pulp, a (wet) solid mass containing mainly insoluble tomato components called the fibers as well as seeds and skin. Sieves were used to remove seeds and skin and further separation of the fibers is achieved by using a decanter or a centrifugal separator, such as a Westfalia CA-365-010 at a revolution speed of 4000 rpm and/or an Alfa Laval Centrifuge.

The tomato serum was concentrated to 12.5 degrees Brix strength using a Mitchell pilot plant tray dryer with a dry bulb temperature of 65 degrees C. Then the concentrated tomato serum was separated into a first portion and a second portion whereby the first portion is relatively lower in lycopene than the second portion using ultra filtration. The separation was carried out by ultra filtering the tomato serum through an Alfa-Laval polysulphone membrane with 100kDa molecular weight cut-off (GR40PP). The ultra filtration was performed in the plate and frame module of an M20 Alfa-Laval filtration rig at 50 C degrees Celsius with a trans-membrane pressure of 2-3 bars and a recirculation flow rate of 12L/min for the retentate stream. The permeate (first portion from the separation step) was substantially free from lycopene.

The permeate obtained after the ultra filtration step was then further concentrated by means of the same Mitchell tray dryer with a dry bulb temperature 65 degrees C until reaching 40 degrees Brix strength. In the following step, the concentrated permeate was fractionated into a first primary fraction and a second primary fraction whereby the second primary fraction had a w/w ratio of citric acid to glutamic acid lower than the first primary fraction. For this fractionation step, the concentrated permeate was used as a feed in ion exclusion chromatography by passing the feed over a XK 2.6/100 GE healthcare column. The ion exclusion resin used was the DIAION UBK530 in its K+ form. The length of bed filled with the resin was measured to 92cm and the diameter was 26mm. The temperature of the column was kept at 65 degrees C using a thermostat. The injection of feed and execution of the chromatography setup was achieved using an ÅKTA explorer 100 system from GE healthcare. A 5% Bed Volume (BV) of feed was injected followed by 1.5BV of elution, whereby particle free tomato serum of 1.6Brix was the eluent. The cross flow velocity of the eluent was set to 2 cm/min.

The first 0.3BV of each injection was discarded and the remaining elution of the chromatography was collected in three subsequent fractions at different BV intervals in a refrigerated environment in order to remain suitable for human consumption. A first fraction was collected until 0.45 BV. A second fraction was collected between 0.45-0.62 bed volume intervals. The third fraction was remaining elution of the chromatography. The fractions were analyzed online for pH, electrical conductivity and refractive index. To obtain enough material, a number of injections were made sequentially and the respective fractions were pooled. The second fraction which was used as the umami active fraction was substantially free from lycopene.

Glucose, fructose and citric acid were determined by HPLC, using Aminex HPX-87H column, 300 x 7.8mm and 5 mM sulphuric acid, pH=2 as eluent, flow rate 0.6 ml/min, at 65 °C. Detection was carried out using UV (220 nm) and refractive index detector. This method may slightly overestimate the amount of glucose and fructose as the trace amount of sucrose in the tomato fraction is inverted to glucose and fructose. For the present purpose this is ignored and the values of glucose and fructose have not been corrected. The glutamic acid and aspartic acid were determined by AccQTag HPLC method of Waters Cooperation USA.

### Umami active fraction A

| Ratio | Umami Active fraction **A** |
|---|---|
| w/w ratio of Citric Acid to Glutamic acid | 0.8 |
| w/w ratio of Glucose to Glutamic acid | 10 |

The method according to the invention was surprisingly more cost effective than the prior art method of WO2008/040611. Compared to the prior art method described in WO2008/040611 yield of the inventive method was at least 5 times more increased.

### Example 2

Another umami active fraction was prepared using a method similar to example 1, umami active fraction B.(tomatoes were not heated for the preparation of the tomato serum)

### Umami active fraction B

| Ratio | Umami Active fraction **B** |
|---|---|
| w/w ratio of Citric Acid to Glutamic acid | 0.78 |
| w/w ratio of Glucose to Glutamic acid | 10.9 |

### Assessment of the umami enhancement of the umami active fraction using a trained sensory panel

To identify the impact on flavour of the umami active fraction obtained, sensory evaluations have been performed by a trained sensory panel. This panel consisted of 14 panellists, selected from a group of over 100 panellists on the basis of screening tests for their ability to identify basic tastes and familiar odours, recognition of odours and tastes and verbal creativity. The panel was trained intensively on differentiating intensities of umami taste.

### Assessment of MSG reference solutions

The sensitivity of the sensory panel was evaluated by offering the panel several reference MSG solutions with different levels of MSG (0.5, 0.75, 1 and 2 g/L). The solutions were set to pH 5.4 using small addition of NaOH

The exact compositions of the standard MSG solutions used are shown to the table below.

TABLE. MSG standard solutions used in the sensory panel.

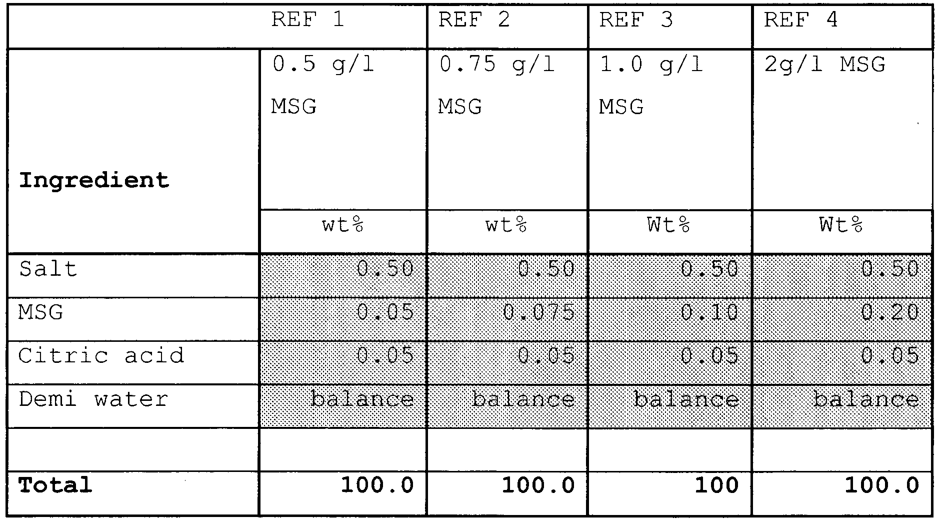

The four MSG reference solutions were compared to each other in a ranking test. The ranking test is frequently used in sensory analyses and is a very sensitive test in which products are directly compared to each other on an attribute of interest (Lee, H.-S., van Hout, D., & O' Mahony, M.(2007). Sensory difference tests for margarine: A comparison of R-Indices derived from ranking and A-Not A methods considering response bias and cognitive strategies, Food Quality and Preference, 18, 675-680). The assessment was conducted in triplicates and the panel ranked these 4 MSG reference solutions on the attribute umami-taste and accurately perceived a significant difference (p<0.05) between the four solutions. The results showed that the panel was able to differentiate between all 4 MSG reference solutions and to rank these correctly from low to high umami taste corresponding to the amount of MSG.

### Assessment of Umami taste and enhancement of umami taste of the umami active fraction

The same sensory panel was used for assessment of the enhancement of the Umami taste of umami active fraction B obtained in example 2. To this end the umami active fraction B was diluted and the umami enhancement of the diluted tomato fraction determined by ranking the umami taste thereof to MSG reference solutions comprising 0.5, 1.0, 1.5 and 2.0 g/L MSG respectively. The diluted tomato fraction was prepared by diluting the umami enhancing tomato fraction as prepared according to example 1 with water such that the resulting glutamic acid level corresponded to 0.5 g/L MSG. 0.5 wt% NaCl was also added to the diluted tomato fractions. With such NaCl concentration in the background, it is easier to differentiate different levels of umami taste. Both the diluted tomato fraction and the MSG reference solutions were set to pH 5.4 using small addition of NaOH.

The assessment conducted in triplicates, 42 ranking results were obtained and the results were also statistically analyzed. Surprisingly, the trained panel ranked the diluted tomato fraction with an equivalent of 0. 5g/l MSG in the same group as the 2g/L MSG standard solution. This demonstrated that the taste enhancing tomato fraction was capable of enhancing the umami taste four times.

**A dehydrated potato soup composition comprising the umami active fraction according to the invention (to be diluted by about 10 times with water before consumption).**

| Ingredient | Wt% |
|---|---|
| Fat | 21.5 |
| Thickener | 23.2 |
| crème fraiche | 13.0 |
| Salt | 5.9 |
| Umami active fraction (dehydrated) | 13.5 |
| 5'IMP and 5'GMP | 0.3 |
| Flavouring | 0.2 |
| Pepper | 0.0 |
| Palm oil | 3.5 |
| Herbs and spices | 3.4 |
| Vegetables | 4.2 |
| Potato flakes | balance |
| Total | 100.0 |

**A chicken bouillon composition comprising a dehydrated umami active fraction according to the invention.**

| Ingredient | Wt% |
|---|---|
| Palm fat | 6.00 |
| Sugar | 12.50 |
| Chicken flavour | 9.40 |
| Yeast extract | 2.50 |
| Colourant | 0.10 |
| Acidifier | 0.30 |
| Onion | 0.70 |
| umami active fraction (dehydrated) | 28.00 |
| Salt | balance |
| Total | 100.00 |

## Claims

1. A method of producing an umami active fraction comprising the steps of
a) providing a tomato serum, preferably substantially free from sucrose;
b) separating the serum into two or more portions: at least one first portion and at least one second portion whereby the at least one first portion is lower in lycopene than the at least one second portion;
c) concentrating the at least one first portion low in lycopene,;
d) fractionating at least one first portion low in lycopene obtained in step c) into at least three fractions: a first fraction, a second fraction and a third fraction
whereby the w/w ratio of citric acid to glutamic acid (Citr/Glut) of the first fraction is higher than the second fraction, and the Citr/Glut ratio of the third fraction is lower than in the second fraction;
and whereby the second fraction has a w/w ratio of glucose to glutamic acid of at least 7, and wherein glutamic acid refers to both the free protonated acid and the deprotonated form either in solution or as a salt; and
e) optionally, concentrating said second fraction, whereby said second fraction is used as the umami active tomato fraction.

2. A method according to claim 1 whereby the said second fraction used as the umami active tomato fraction has a w/w ratio of glucose to glutamic acid of at least 8, more preferably at least 10, preferably at most 100 000, more preferably at most 10 000, most preferably at most 1000.

3. A method according to claim 1 or 2 whereby the said second fraction used as the umami active tomato fraction has a w/w ratio of citric acid to glutamic acid (C/Glu) of more than 0.7, preferably more than 0.75, and preferably less than 1.5, more preferably less than 1.4, more preferably less than 1.3.

4. A method according to any one of the preceding claims whereby in step c the at least one first portion low in lycopene is concentrated to a Brix value of at least 10, preferably at least 12, more preferably at least 20, more preferably at least 30 and preferably at most 80, more preferably at most 60, even more preferably at most 50 degrees Brix.

5. A method according to any one of the preceding claims whereby the eluent used in the fractionation is particle free tomato serum of at most 10 degrees Brix, more preferably to at most 5 degrees Brix, even more preferably, to at most 3 degrees Brix, preferably at least 0.01 degrees Brix, more preferably at least 0.05 degrees Brix.

6. A method according to any one of the preceding claims whereby an amount of heat is applied when preparing the tomato serum such that the tomatoes reach a temperature of above 80 degrees C.

7. An umami active fraction obtainable by a method according to any one of claims 1 to 6 whereby the umami active fraction comprises
i) a w/w ratio of glucose to glutamic acid of at least 7, preferably at least 8, more preferably at least 10, preferably at most 100 000, more Preferably at most 10 000, most preferably at most 1000
ii) at least 1 wt%, preferably at least 10 wt%, more preferably at least 15 wt% and preferably less than 70 wt%, more preferably less than 60 wt%, even more preferably less than 50 wt% of glutamic acid, all weights by dry weight of the tomato fraction;
iii) a w/w ratio of fructose to glucose of less than 1; and
iv) preferably a w/w ratio of citric acid to glutamic acid (C/Glu) of more than 0.7, preferably more than 0.75, and preferably less than 1.5, more preferably less than 1.4, more preferably less than 1.3.

8. An umami active fraction according to claim 7 said umami active fraction further comprising
a) at least 5 wt%, preferably at least 15 wt%, more preferably at least 20 wt%, and preferably at most 70 wt% fructose, preferably at most 65 wt%, more preferably at most 60 wt% of fructose
b) preferably a w/w ratio of fructose to glucose of less than 0.75, more preferably less than 0.5, even more preferably less than 0.4, most preferably less than 0.2, preferably more than 0.0001 and most preferably 0 or more;
c) preferably at least 0.1 wt%, preferably at least 5 wt%, preferably at least 10 wt%, more preferably at least 15 wt% and preferably less than 70 wt%, more preferably less than 60 wt%, even more preferably less than 50 wt% of aspartic acid;
d) preferably at least 20 wt%, more preferably at least 30 wt%, preferably at least 35 wt%, and preferably at most 90 wt%, more preferably at most 60 wt%, more preferably at most 50 wt% of glucose; based on the dry weight of the umami active tomato fraction.

9. An umami active fraction according to claim 7 or 8 capable of eluting from a cation exclusion resin in the potassium form at 65 degrees Celsius using a particle free tomato serum as eluent.

10. A method of adding or enhancing the umami taste of a food product by mixing the food product with a sufficient amount of umami active tomato fraction according to claim 7 or 8.

11. A method according to claim 10 whereby a sufficient amount of the umami active fraction is at least 0.01 wt%, based on the dry weight of the umami active fraction and the food product.

12. A method according to any one of claims 10 or 11 whereby the food product is selected from the group comprising tomato ketchup, sauces, soups, meals, side dishes, cooking aids, beverages, ice cream and fruit and vegetable concentrates, said food product having at least an equivalent umami taste perception when compared to the product comprising a higher concentration of glutamic acid in absence of the umami active fraction.

13. Use of an umami active fraction according to claim 7 or 8 for replacing at least part of the glutamic acid and sweetening agent .in a food product.

## Patentansprüche

1. Verfahren zum Herstellen einer Umami-aktiven Fraktion, das die folgenden Schritte aufweist:
a) Bereitstellen eines Tomatenserums, das vorzugsweise im Wesentlichen frei von Saccharose ist;
b) Trennen des Serums in zwei oder mehr Teile: zumindest einen ersten Teil und zumindest einen zweiten Teil, wobei der zumindest erste Teil weniger Lycopin als der zumindest eine zweite Teil aufweist;
c) Konzentrieren des zumindest einen ersten Teils mit geringem Lycopingehalt;
d) Fraktionieren des im Schritt c) erhaltenen zumindest einen ersten Teils, der einen geringen Lycopingehalt hat, in mindestens drei Fraktionen: eine erste Fraktion, eine zweite Fraktion und eine dritte Fraktion wobei das Gewichtsverhältnis zwischen Citronensäure und Glutaminsäure (Citr./Glut.) der ersten Fraktion höher als das der zweiten Fraktion ist und das Verhältnis Citr./Glut. der dritten Fraktion niedriger als das der zweiten Fraktion ist; und
wobei die zweite Fraktion ein Gewichtsverhältnis zwischen Glucose und Glutaminsäure von mindestens 7 hat und wobei sich Glutaminsäure sowohl auf die freie protonierte Säure als auch die deprotonierte Form entweder in Lösung oder als Salz bezieht; und
e) gegebenenfalls Konzentrieren der zweiten Fraktion, wobei die zweite Fraktion als Umami-aktive Tomatenfraktion verwendet wird.

2. Verfahren nach Anspruch 1,
wobei die zweite Fraktion, die als Umami-aktive Tomatenfraktion verwendet wird, ein Gewichtsverhältnis zwischen Glucose und Glutaminsäure von mindestens 8, stärker bevorzugt mindestens 10, vorzugsweise von höchstens 100000 und stärker bevorzugt höchstens 10000, besonders bevorzugt höchstens 1000 aufweist.

3. Verfahren nach Anspruch 1 oder 2,
wobei die zweite Fraktion, die als Umami-aktive Tomatenfraktion verwendet wird, ein Gewichtsverhältnis zwischen Citronensäure und Glutaminsäure (C/Glu) von mehr als 0,7, vorzugsweise mehr als 0,75 und vorzugsweise von weniger als 1,5, stärker bevorzugt weniger als 1,4, stärker bevorzugt weniger als 1,3 aufweist.

4. Verfahren nach einem der vorstehenden Ansprüche,
wobei im Schritt c) der zumindest eine erste Teil, der einen geringen Lycopingehalt aufweist, bis zu einem Brix-Wert von mindestens 10, vorzugsweise mindestens 12, stärker bevorzugt mindestens 20, stärker bevorzugt mindestens 30 und vorzugsweise höchstens 80, stärker bevorzugt höchstens 60, noch stärker bevorzugt höchstens 50 Brix-Grad konzentriert wird.

5. Verfahren nach einem der vorstehenden Ansprüche,
wobei das beim Fraktionieren verwendete Elutionsmittel partikelfreies Tomatenserum mit höchstens 10 Brix-Grad, stärker bevorzugt höchstens 5 Brix-Grad, noch stärker bevorzugt höchstens 3 Brix-Grad, vorzugsweise mindestens 0,01 Brix-Grad, stärker bevorzugt mindestens 0,05 Brix-Grad ist.

6. Verfahren nach einem der vorstehenden Ansprüche,
wobei bei der Herstellung des Tomatenserums eine solche Wärmemenge angewendet wird, dass die Tomaten eine Temperatur von mehr als 80 °C erreichen.

7. Umami-aktive Fraktion, die nach einem Verfahren nach einem der Ansprüche 1 bis 6 erhalten werden kann, wobei die Umami-aktive Fraktion Folgendes aufweist:
i) ein Gewichtsverhältnis zwischen Glucose und Glutaminsäure von mindestens 7, vorzugsweise mindestens 8, stärker bevorzugt mindestens 10, vorzugsweise von höchstens 100000, stärker bevorzugt höchstens 10000, besonders bevorzugt höchstens 1000;
ii) mindestens 1 Gew.-%, vorzugsweise mindestens 10 Gew.-%, stärker bevorzugt mindestens 15 Gew.-% und vorzugsweise weniger als 70 Gew.-%, stärker bevorzugt weniger als 60 Gew.-%, noch stärker bevorzugt weniger als 50 Gew.-% Glutaminsäure, wobei das Gewicht jeweils auf das Trockengewicht der Tomatenfraktion bezogen ist;
iii) ein Gewichtsverhältnis zwischen Fructose und Glucose von weniger als 1; und
iv) vorzugsweise ein Gewichtsverhältnis zwischen Citronensäure und Glutaminsäure (C/Glu) von mehr als 0,7, vorzugsweise mehr als 0,75 und vorzugsweise weniger als 1,5, stärker bevorzugt weniger als 1,4, noch bevorzugter weniger als 1,3.

8. Umami-aktive Fraktion nach Anspruch 7,
wobei die Umami-aktive Fraktion ferner Folgendes aufweist:
a) mindestens 5 Gew.-%, vorzugsweise mindestens 15 Gew.-%, stärker bevorzugt mindestens 20 Gew.-% und vorzugsweise höchstens 70 Gew.-% Fructose, vorzugweise höchstens 65 Gew.-%, stärker bevorzugt höchstens 60 Gew.-% Fructose;
b) vorzugsweise ein Gewichtsverhältnis zwischen Fructose und Glucose von weniger als 0,75, stärker bevorzugt weniger als 0,5, noch stärker bevorzugt weniger als 0,4, besonders bevorzugt weniger als 0,2, vorzugsweise von mehr als 0,0001 und besonders bevorzugt 0 oder mehr;
c) vorzugsweise mindestens 0,1 Gew.-%, vorzugsweise mindestens 5 Gew.-%, vorzugsweise mindestens 10 Gew.-%, stärker bevorzugt mindestens 15 Gew.-% und vorzugsweise weniger als 70 Gew.-%, stärker bevorzugt weniger als 60 Gew.-%, noch stärker bevorzugt weniger als 50 Gew.-% Asparaginsäure;
d) vorzugsweise mindestens 20 Gew.-%, stärker bevorzugt mindestens 30 Gew.-%, vorzugsweise mindestens 35 Gew.-% und vorzugsweise höchstens 90 Gew.-%, stärker bevorzugt höchstens 60 Gew.-%, stärker bevorzugt höchstens 50 Gew.-% Glucose, und zwar auf das Trockengewicht der Umami-aktiven Tomatenfraktion bezogen.

9. Umami-aktive Fraktion nach Anspruch 7 oder 8,
die aus einem Kationenausschlussharz in der Kaliumform bei 65 °C eluieren kann, wobei partikelfreies Tomatenserum als Elutionsmittel verwendet wird.

10. Verfahren zum Hinzufügen oder Verstärken des Umami-Geschmacks eines Nahrungsmittelproduktes durch Mischen des Nahrungsmittelproduktes mit einer ausreichenden Menge einer Umami-aktiven Tomatenfraktion nach Anspruch 7 oder 8.

11. Verfahren nach Anspruch 10,
wobei die ausreichende Menge der Umami-aktiven Fraktion mindestens 0,01 Gew.-% beträgt, und zwar auf das Trockengewicht der Umami-aktiven Fraktion und des Nahrungsmittelproduktes bezogen.

12. Verfahren nach einem der Ansprüche 10 oder 11,
wobei das Nahrungsmittelprodukt aus der Gruppe ausgewählt ist, bestehend aus Tomatenketchup, Saucen, Suppen, Mehl, Beilagen, Kochhilfsmitteln, Getränken, Eiscreme und Frucht- und Pflanzenkonzentraten, wobei das Nahrungsmittelprodukt im Vergleich mit dem Produkt ohne die Umami-aktive Fraktion, das eine höhere Glutaminsäurekonzentration aufweist, zumindest eine äquivalente Wahrnehmung von Umamigeschmack aufweist.

13. Verwendung einer Umami-aktiven Fraktion nach Anspruch 7 oder 8,
um zumindest einen Teil der Glutaminsäure und des Süßungsmittels in einem Nahrungsmittelprodukt zu ersetzen.

## Revendications

1. Procédé de production d'une fraction de saveur umami active comprenant les étapes suivantes
a) préparer un sérum de tomates, de préférence exempt de saccharose ;
b) séparer le sérum en deux portions ou plus : au moins une première portion et au moins une seconde portion, ladite au moins première portion ayant une teneur en lycopènes inférieure à celle de ladite au moins seconde portion ;
c) concentrer ladite au moins première portion pauvre en lycopènes ;
d) fractionner au moins une première portion pauvre en lycopènes obtenue à l'étape c) en au moins trois fractions : une première fraction, une deuxième fraction et une troisième fraction dans lequel le rapport p/p de l'acide citrique à l'acide glumatique (Citr/Glut) de la première fraction est supérieur à celui de la deuxième fraction, et le rapport Citr/Glut de la troisième fraction est inférieur à celui de la deuxième fraction ;
et dans lequel la deuxième fraction a un rapport p/p du glucose à l'acide glutamique d'au moins 7, l'acide glutamique désignant à la fois l'acide protoné libre et la forme déprotonée soit en solution, soit sous la forme d'un sel ; et
e) éventuellement, concentrer ladite deuxième fraction, ladite deuxième fraction étant utilisée à titre de fraction de saveur umami active de tomates.

2. Procédé selon la revendication 1, dans lequel ladite deuxième fraction utilisée à titre de fraction de saveur umami active de tomates a un rapport p/p du glucose à l'acide glutamique d'au moins 8, plus préférablement d'au moins 10, de préférence d'au plus 100 000, plus préférablement d'au plus 10 000, et de manière préférée entre toutes d'au plus 1000.

3. Procédé selon les revendications 1 ou 2, dans lequel ladite deuxième fraction utilisée à titre de fraction de saveur umami active de tomates a un rapport p/p de l'acide citrique à l'acide glutamique (C/Glu) supérieur à 0,7, de préférence supérieur à 0,75, et de préférence inférieur à 1,5, plus préférablement inférieur à 1,4, plus préférablement inférieur à 1,3.

4. Procédé selon l'une quelconque des revendications précédentes, dans lequel dans l'étape c ladite au moins première portion pauvre en lycopènes est concentrée à une valeur Brix d'au moins 10, de préférence d'au moins 12, plus préférablement d'au moins 20, plus préférablement d'au moins 30 et de préférence d'au plus 80, plus préférablement d'au plus 60, plus préférablement encore d'au plus 50 degrés Brix.

5. Procédé selon l'une quelconque des revendications précédentes, dans lequel l'éluant utilisé dans le fractionnement est un sérum de tomates sans particules d'au plus 10 degrés Brix, plus préférablement d'au plus 5 degrés Brix, plus préférablement encore d'au plus 3 degrés Brix, de préférence d'au moins 0,01 degré Brix, plus préférablement d'au moins 0,05 degré Brix.

6. Procédé selon l'une quelconque des revendications précédentes, dans lequel une certaine quantité de chaleur est appliquée lors de la préparation du sérum de tomates de façon que les tomates atteignent une température supérieure à 80 °C.

7. Fraction de saveur umami active qui peut être obtenue par un procédé selon l'une quelconque des revendications 1 à 6, dans laquelle la fraction de saveur umami active comprend
i) un rapport p/p du glucose à l'acide glutamique d'au moins 7, de préférence d'au moins 8, plus préférablement d'au moins 10, de préférence d'au plus 100 000, plus préférablement d'au plus 10 000, et de manière préférée entre toutes d'au plus 1000 ;
ii) au moins 1 % en poids, de préférence au moins 10% en poids, plus préférablement au moins 15 % en poids et de préférence moins de 70 % en poids, plus préférablement moins de 60 % en poids, plus préférablement encore moins de 50 % en poids d'acide glutamique, tous les poids en poids sec de la fraction de tomates ;
iii) un rapport p/p du fructose au glucose inférieur à 1 ; et
iv) de préférence un rapport p/p de l'acide citrique à l'acide glutamique (C/Glu) supérieur à 0,7, de préférence supérieur à 0,75, et de préférence inférieur à 1,5, plus préférablement inférieur à 1,4, plus préférablement inférieur à 1,3.

8. Fraction de saveur umami active selon la revendication 7, ladite fraction de saveur umami active comprenant en outre
a) au moins 5 % en poids, de préférence au moins 15% en poids, plus préférablement au moins 20 % en poids, et de préférence au plus 70 % en poids de fructose, de préférence au plus 65 % en poids, plus préférablement au plus 60 % en poids de fructose
b) de préférence un rapport p/p du fructose au glucose inférieur à 0,75, plus préférablement inférieur à 0,5, plus préférablement encore inférieur à 0,4, et de manière préférée entre toutes inférieur à 0,2, de préférence supérieur à 0,0001 et de manière préférée entre toutes de 0 ou plus ;
c) de préférence au moins 0,1% en poids, de préférence au moins 5 % en poids, de préférence au moins 10 % en poids, plus préférablement au moins 15 % en poids et de préférence moins de 70 % en poids, plus préférablement moins de 60 % en poids, plus préférablement encore, moins de 50 % en poids d'acide aspartique ;
d) de préférence au moins 20 % en poids, plus préférablement au moins 30 % en poids, de préférence au moins 35 % en poids, et de préférence au plus 90 % en poids, plus préférablement au plus 60 % en poids, plus préférablement au plus 50 % en poids de glucose, sur la base du poids sec de la fraction de saveur umami active des tomates.

9. Fraction de saveur umami active selon les revendications 7 ou 8 capable d'élution à partir d'une résine d'exclusion de cations sous forme de potassium à 65°C en utilisant un sérum de tomates sans particules à titre d'éluant.

10. Procédé d'ajout ou d'amélioration de la saveur umami d'un produit alimentaire par mélange du produit alimentaire avec une quantité suffisante de fraction de saveur umami active de tomates selon les revendications 7 ou 8.

11. Procédé selon la revendication 10, dans lequel une quantité suffisante de la fraction de saveur umami active est d'au moins 0,01 % en poids, sur la base du poids sec de la fraction de saveur umami active et du produit alimentaire.

12. Procédé selon l'une quelconque des revendications 10 ou 11, dans lequel le produit alimentaire est choisi dans le groupe comprenant le ketchup de tomates, les sauces, les soupes, les bouillies, les accompagnements, les aides culinaires, les boissons, la glace et les concentrés de fruits et de légumes, ledit produit alimentaire laissant une perception de saveur umami au moins équivalente au produit contenant une concentration plus élevée d'acide glutamique en l'absence de la fraction de saveur umami active.

13. Utilisation d'une fraction de saveur umami active selon les revendications 7 ou 8 pour remplacer au moins une partie de l'acide glutamique et l'agent édulcorant dans un produit alimentaire.
